# EUROPEAN PATENT SPECIFICATION

(11) **EP 3 151 028 B1**
(45) Date of publication and mention of the grant of the patent: **14.11.2018**
(21) Application number: 15187367.6
(22) Date of filing: 29.09.2015
(51) Int. Cl.: G01S 3/74

(54) **DIRECTION FINDER AND METHOD FOR DIRECTION FINDING WHEREIN A QUALITY CRITERION FOR THE INCOMING SIGNALS IS DETERMINED**
RICHTUNGSFINDER UND VERFAHREN ZUR RICHTUNGSFINDUNG, IN DEM EIN QUALITÄTSKRITERIUM FÜR DIE EINGEHENDEN SIGNALE BESTIMMT WIRD
RADIOGONIOMÈTRE ET PROCÉDÉ DE RADIOGONIOMÉTRIE, DANS LEQUEL UN CRITÈRE DE QUALITÉ POUR LES SIGNAUX ENTRANTS EST DÉTERMINÉ

(43) Date of publication of application: 05.04.2017
(73) Proprietor: Rohde & Schwarz GmbH & Co. KG, 81671 München (DE)
(72) Inventor: Stein, Moritz, 85586 Poing (DE)
(74) Representative: Prinz & Partner mbB

(56) References cited:
- US-A- 5 262 789
- US-A- 5 359 333
- US-A1- 2003 052 820
- MAT1 WAX ET AL: "Detection of Signals by Information Theoretic Criteria", IEEE TRANSACTIONS ON ACOUSTICS, SPEECH, AND SIGNAL PROCESSING, 1 January 1985 (1985-01-01), pages 33-387, XP055264832,

## Description

The invention relates to a direction finder and a method for direction finding, in particular high-resolution direction finding.

Direction finding is the measurement of a direction of an incoming signal received by a direction finder. In general, radio or other electromagnetic waves can be detected. Typically, two methods for direction findings are known in the state of the art. One of these methods is known as conventional direction finding and the other one as high-resolution direction finding. These two methods distinguish from each other in their information obtained as the high-resolution direction finding method provides additional information about the number of signal emitters of certain incoming signals simultaneously detected by the direction finder, as well as their locations. Accordingly, the high-resolution direction finding allows separating time correlated co-channel signals and to locate their signal sources, in particular the parameters azimuth and elevation.

This additional information is gathered by an evaluation step in which the incoming signals are used for calculating a correlation matrix. The eigenvalues of this correlation matrix are obtained by using QR decomposition or other methods in order to detect the presence of co-channel signals. To evaluate the number of signal emitters, the degree of correlation of the co-channel signals is determined wherein the spatial and temporal correlations are taken into account. Coherent co-channel interferences can occur when an emitted signal of one signal emitter is reflected by other objects whereas incoherent co-channel interferences occur when different signal emitters are used simultaneously. Hence, it is necessary to separate the incoherent co-channel interferences from the coherent co-channel interferences in order to evaluate the number of signal emitters. Appropriate procedures for separating these co-channel interferences are known.

However, it has turned out that under certain circumstances the evaluation of the number of signal emitters is improper. For instance, the eigendecomposition of the correlation matrix provides unsatisfactory results when the incoming signals of several different signal emitters are weak, the selected number of samples (measurement cycles) is too low and/or the signal level of coherent co-channel interferences is too high. Accordingly, the evaluated number of signal emitters which is indicated to the user can be incorrect or at least questionable.

US 5,262,789 and US 5,359,333 show generic methods for direction finding wherein incoming signals are received and analyzed. Further, the number of emitters is estimated. During the analyzing step, the power of the incoming signals is estimated or the characteristics of the incoming signals are determined.

The invention provides a method (defined by claim 1) for direction finding wherein incoming signals are scanned and analyzed. Then, the number of signal emitters within at least one frequency band is evaluated, and a quality criterion for the incoming signals within the at least one frequency band is determined wherein the quality criterion indicates the quality of the number evaluated.

Further, the invention provides a direction finder (defined by claim 10) comprising an antenna system, a processing unit and a display wherein the direction finder is configured to execute the method mentioned above.

The invention also provides a display device (defined by claim 14) for a direction finder, wherein the display device comprises a display and a processing unit which is configured to execute the method mentioned above.

The invention is based on the finding that a quality criterion for the evaluation can be determined by the parameters already gathered when analyzing the incoming signals. Thus, it can be estimated if the number of signal emitters provided by the evaluation is trustworthy or not. So far, the evaluated number was displayed without any information about its correctness or plausibility. According to the invention, this formerly missing information is now available without measuring additional parameters.

Preferably, the evaluated number of signal emitters is displayed as a content of a graphical user interface. A user of the direction finder can easily receive the information about the evaluated number of signal emitters when it is displayed.

The determined quality criterion can also be displayed as a content of a graphical user interface. The quality criterion can be retrieved by the user upon request. Alternatively, the quality criterion can be displayed together with the evaluated number of signal emitters such that the user receives both information simultaneously.

According to a preferred embodiment, the quality criterion is displayed as a percentage value. A percentage value is most appropriate to illustrate a probability, in particular the robustness of the evaluation.

The quality criterion can be determined by analyzing the distribution of the eigenvalues of the incoming signals. The distribution of the eigenvalues is usually obtained when high-resolution direction finding is executed in order to detect co-channel signals and locate their signal emitters. Accordingly, the quality criterion can be easily determined without measuring new parameters. Thus, the quality criterion can be determined without extra efforts.

Particularly, the distribution of the eigenvalues of the incoming signals is displayed as a content of a graphical user interface. The distribution of the eigenvalues can also be displayed upon request such that the user can review the determination of the quality criterion. Alternatively or complementary, the distribution of the eigenvalues can be illustrated directly when the quality criterion is displayed.

Preferably, settings of a user are taken into account when determining the quality criterion, in particular a selected frequency bandwidth, a selected number of samples and/or a selected sample duration. Usually, the user defines a receiving scenario for a scan mode according to which the incoming signals are scanned. The frequency bandwidth, the number of samples or their duration can be preselected by the user manually, or a certain scenario can be selected which sets predetermined values for these parameters automatically. Generally, these settings influence the scan mode and, therefore, they also have an influence on the quality criterion. Thus, the settings are taken into account in order to provide a reliable evaluation represented by the quality criterion.

Optimizing provisions for scanning parameters can be provided which influence the determination of the quality criterion. During the determination of the quality criterion, parameters are taken into account having an influence on the evaluation. For instance, these parameters are inter alia the selected frequency bandwidth, a selected number of samples and/or a selected sample duration which are also used during the scan mode. Therefore, the processing unit can determine provisions regarding these scanning parameters in order to optimize the scan mode such that the reliability of the evaluation increases. Accordingly, the quality criterion is used to assist the user in finding parameters for optimizing the scan mode. Hence, the computing capacity can be reduced as the scan mode is optimized.

Preferably, the optimizing provisions are displayed as content of the graphical user interface upon request or directly. During an automatic scan mode, these optimizing parameters can be used directly by the processing unit.

According to another preferred embodiment, the determined quality criterion is used during the scanning of the incoming signals. The quality criterion can be used by the processing unit itself in order to reduce a false alarm rate during the scan, in particular during an automatic scan.

Further, the direction finder may be operable in an automatic mode. Accordingly, it is possible that the direction finder automatically records incoming signals without manual input. Thus, the direction finder can be used in a certain distance to the user or operator. The direction finder may start to record incoming signals when the quality criterion reaches a certain value being a threshold value. For instance, this threshold value is 75 %.

Alternatively or complementary, the direction finder may be operable in a manual mode. Preferably, the user can switch between the automatic and the manuel modes.

The processing unit of the display device may the one of the whole direction finder or a separate one communicating with the processing unit of the direction finder.

According to an aspect of the invention, the processing unit of the display device is connected to the display wherein the processing unit is configured to provide display data to the display representing the determined quality criterion such that the display displays the quality criterion as content of a graphical user interface. Thus, the processing unit generates the graphical user interface which content is also determined by the processing unit automatically or upon request of the user. The quality criterion is displayed as content of the graphical user interface in an area which is determined by the processing unit. Thus, the location of the displayed quality criterion can vary or be adjusted by the user.

Generally, an optimization of resources is provided by the method, in particular regarding the sample duration and/or the computing capacity as the relevant incoming signals can be identified with a higher accuracy. Thus, the reliability of the overall direction finding is also improved.

The invention will now be described with reference to a preferred embodiment which is shown in the enclosed drawings. In the drawings,
- Figure 1 schematically shows a direction finder according to the invention,
- Figure 2 is a flow-chart representing a method according to the invention, and
- Figure 3 a display device of a direction finder according to the invention.

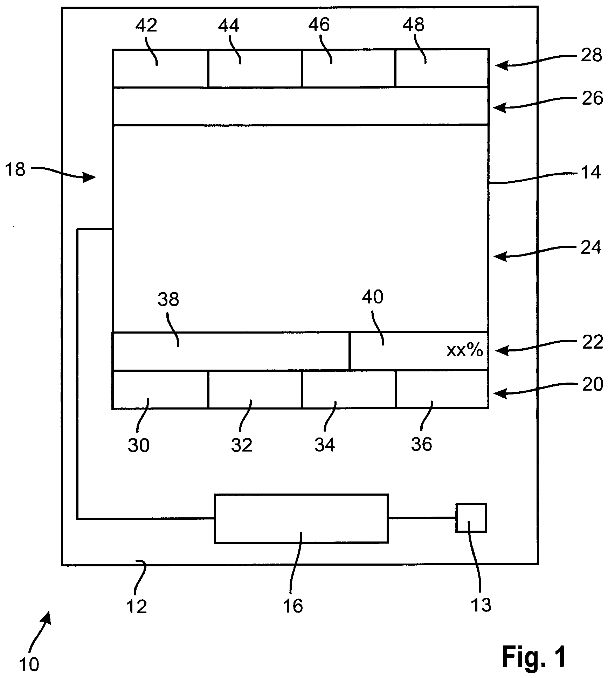

In Figure 1, a direction finder 10 is schematically shown which comprises a housing 12, an antenna system 13, a display 14 and a processing unit 16 which controls the display 14 and the information displayed thereon. A graphical user interface 18 is displayed on the display 14, the content of which is determined by the processing unit 16.

The processing unit 16 is also connected to the antenna system 13 in order to process and analyze the incoming signals detected by the antenna system 13 as will be described later.

In general, the display 14 can be an actuatable display such as a capacitive or resistive one. Thus, the user can easily interact with the graphical user interface 18, in particular the processing unit 16. Accordingly, the display 14 is also used as a control element providing the possibility to control the information displayed on the display 14 directly.

Alternatively or complementary, the direction finder 10 can have an actuating element which is not shown in Figure 1. This actuating element comprises keys which can be actuated by a user in order to control the direction finder 10 and the displayed information. The user can input requests, commands or data to be processed by the processing unit 16 via the actuating element. Hence, this actuating element is also connected to the processing unit 16. If the display 14 is a non-actuatable display, the information displayed thereon is only selectable by actuating the keys of the actuating element.

The graphical user interface 18 has different areas 20 - 28 which each display certain contents; for instance a selectable menu, a value or graphical information. These areas 20 - 28 can be subdivided into subareas 30 - 48. In the shown embodiment, the graphical user interface 18 comprises five areas 20 - 28 and ten subareas 30 - 48.

The information or content displayed in the areas 20 - 28, in particular the subareas 30 - 48, can be changed by the user or it changes automatically under certain circumstances.

For instance, the subarea 40 illustrates information regarding a number of signal emitters emitting an incoming signal in at least one certain frequency band. The frequency band can be preselected by the user when the user sets scanning parameters or selects a predetermined receiving scenario. The number of signal emitters is evaluated by the processing unit 16 using certain and known procedures.

However, the evaluation might be incorrect or has at least a questionable plausibility. Therefore, a quality criterion is determined by the processing unit 16 which can also be displayed in this subarea 40 such that the user receives the information about the evaluated number and simultaneously its reliability. Alternatively, the quality criterion is displayed upon request, for instance by actuating a key of the actuating element or touching the display 14.

Preferably, the quality criterion is displayed as a percentage value which is most appropriate to illustrate a probability.

Accordingly, the user can decide easily if the evaluated number of signal emitters is correct or if the displayed number should be questioned.

In general, the quality criterion can be displayed in any other area of the graphical user interface 18. Thus, the position of the subarea 40 illustrating the quality criterion is not restricted to the one shown in Figure 1.

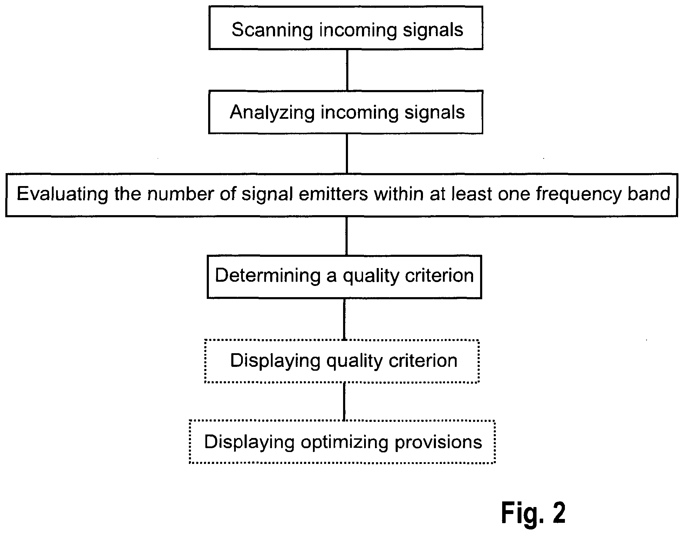

The quality criterion can be determined as described hereinafter with reference to Figure 2.

The direction finder 10 scans all incoming signals via its antenna system 13 according to a preselected receiving scenario by the user. The receiving scenario can be manually set by the user, or one of several predefined receiving scenarios is selected which are stored in the processing unit 16.

The detected incoming signals are then analyzed by the processing unit 16 wherein a high-resolution direction finding method is executed in order to detect co-channel signals. Depending on this analysis, a number of signal emitters is evaluated by using appropriate procedures to separate the coherent and incoherent co-channel interferences. During this analysis, eigenvalues of the incoming signals, in particular the eigenvalues of co-channel signals, are determined as well as their distribution.

This distribution is used by the processing unit to calculate the quality criterion of the evaluation of the number of signal emitters. Accordingly, the quality criterion provides the information for the user to decide if the evaluated number is reasonable or not. The determination can be easily provided as the required parameters are already known.

During the determination of the quality criterion, settings of the user are also taken into account as these settings could influence the scan of the incoming signals and, therefore, the decomposition of the correlation matrix formed by the incoming signals. Typically, a selected frequency bandwidth, a selected number of samples and/or a selected duration of the samples have an influence on the analysis and on the determination of the quality criterion.

As these parameters influence the determination of the quality criterion and the quality of the evaluation which is represented by the quality criterion, optimizing provisions for scanning parameters can be identified, in particular for the frequency bandwidth, the number of samples and/or their duration. These optimizing provisions can also be displayed as part of the graphical user interface 18. Thus, the user can decide if he accepts and adopts the provisions or not.

In general, an optimization of resources can be provided by the method, in particular regarding the sample duration and/or the computing capacity as the relevant incoming signals are identified with a higher accuracy. For example, the number of beamformer can be reduced which are used to fade out disturbing signals.

Displaying the quality criterion as well as the optimizing provisions can be done upon request. Accordingly, these steps are surrounded by dashed lines in Figure 2.

Alternatively or complementary, the determined quality criterion can be used during the scan mode automatically. Particularly, the quality criterion can be incorporated during an automatic scan mode. The usage of the determined quality criterion provides a scan having a lower false alarm rate than typically used direction finders have.

In addition to the evaluated number of signal emitters and the quality criterion, the distribution of eigenvalues can also be illustrated on the display 14 as a content of the graphical user interface 18. This can be done upon request by the user or directly as additional information when the quality criterion is displayed. Accordingly, the user has the opportunity to verify the determination of the quality criterion, in particular a service technician.

As discussed above, the direction finder 10 can be operated in a manual mode wherein the user interacts with the direction finder 10, in particular the display 14.

Alternatively or complementary, the direction finder 10 can be operated in an automatic mode. According to this mode, the direction finder 10 can be positioned at a certain distance wherein the user does not directly interact with the direction finder 10.

For example, the direction finder 10 can be remote controlled.

Generally, the direction finder 10 can record incoming signals when the quality criterion reaches a certain value. This value is some kind of a threshold value as the direction finder 10 starts to record incoming signals when this threshold value is reached, for instance 75 %. Particularly, this automatic record is of interest when the direction finder 10 is used in an automatic mode without a user's interaction.

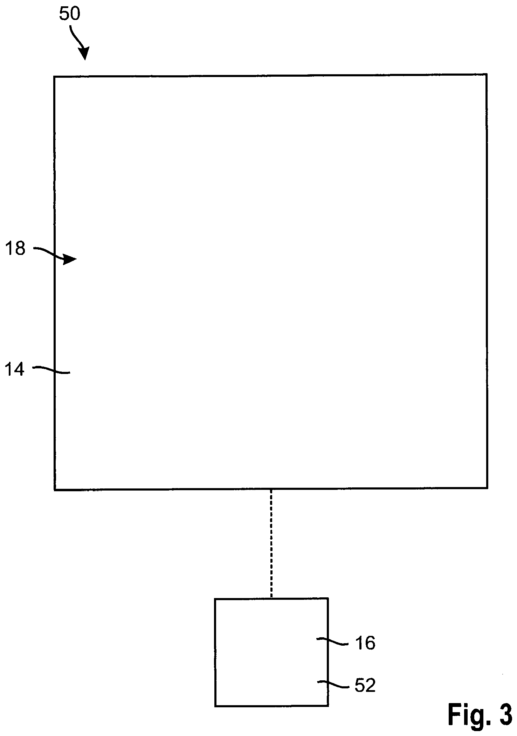

Figure 3 shows a separate display device 50 which comprises a processing unit 52 that is connected to a display. The display can be the display 14 of the direction finder 10 when the display device 50 is integrated into the direction finder 10.

Accordingly, the processing unit 52 may be the processing unit 16 of the direction finder 10 described with reference to Figure 1 or another one which communicates with the processing unit 16 of the direction finder 10.

The graphic user interface 50 is displayed on the display 14 of the display device 50 wherein the processing unit 52 is configured to execute the method described with reference to Figure 2. Hence, the processing unit 52 can provide display data to the display 14 which represent the determined quality criterion. Then, the display 14 displays the quality criterion as content of the graphical user interface 18.

As the processing unit 52 generates the graphical user interface 18, the processing unit 52 selects an area of the display 14 where the content, in particular the quality criterion, is displayed. This can be done automatically or upon request of the user. Thus, the quality criterion can be displayed in a lower or upper area of the display 14, in particular the graphical user interface 18. Alternatively, the quality criterion can be displayed in a middle area of the display 14, in particular the graphical user interface 18, in order to highlight this information.

## Claims

1. A method for direction finding comprising the following steps:
a) Scanning incoming signals,
b) Analyzing the incoming signals, wherein eigenvalues of the incoming signals are determined,
c) Depending on the step of analysing, evaluating the number of signal emitters emitting an incoming signal within at least one frequency band, **characterized by** the step
d) Determining a quality criterion for the incoming signals within the at least one frequency band wherein the quality criterion indicates the reliability of the evaluated number.

2. The method according to claim 1, **characterized in that** the evaluated number of signal emitters is displayed as a content of a graphical user interface (18).

3. The method according to claim 1 or 2, **characterized in that** the determined quality criterion is displayed as a content of a graphical user interface (18).

4. The method according to claim 3, **characterized in that** the quality criterion is displayed as a percentage value.

5. The method according to any of the preceding claims, **characterized in that** the quality criterion is determined by analyzing the distribution of the eigenvalues of the incoming signals.

6. The method according to claim 5, **characterized in that** the distribution of the eigenvalues of the incoming signals is displayed as a content of a graphical user interface (18).

7. The method according to any of the preceding claims, **characterized in that** settings of a user are taken into account when determining the quality criterion, in particular a selected frequency bandwidth, a selected number of samples and/or a selected sample duration.

8. The method according to any of the preceding claims, **characterized in that** optimizing provisions for scanning parameters are provided which influence the determination of the quality criterion.

9. The method according to any of the preceding claims, **characterized in that** the determined quality criterion is used during the scanning of the incoming signals.

10. A direction finder (10) comprising an antenna system (13), a processing unit (16) and a display (14) wherein the direction finder (10) is configured to execute the method according to any of the preceding claims.

11. The direction finder (10) according to claim 10, **characterized in that** the direction finder (10) is operable in an automatic mode.

12. The direction finder (10) according to claim 10 or 11, **characterized in that** the direction finder (10) is operable in a manual mode.

13. A display device for a direction finder (10), wherein the display device comprises a display (14) and a processing unit (16) wherein the processing unit (16) is configured to execute the method according to any of the claims 1 to 9.

14. The display device according to claim 13, **characterized in that** the processing unit (52) is connected to the display (14) wherein the processing unit (52) is configured to provide display data to the display (14) representing the determined quality criterion such that the display (14) displays the quality criterion as content of a graphical user interface (18).

## Patentansprüche

1. Verfahren zur Peilung mit den folgenden Schritten:
a) Abtasten von Empfangssignalen,
b) Analysieren der Empfangssignale, wobei Eigenwerte der Empfangssignale ermittelt werden,
c) abhängig vom Schritt des Analysierens, Auswerten der Anzahl von Signalgebern, die ein Empfangssignal abgeben, innerhalb wenigstens eines Frequenzbandes, **gekennzeichnet durch** den Schritt des
d) Bestimmens eines Gütekriteriums für die Empfangssignale innerhalb des wenigstens einen Frequenzbandes, wobei das Gütekriterium die Zuverlässigkeit der ausgewerteten Anzahl angibt.

2. Verfahren nach Anspruch 1, **dadurch gekennzeichnet, dass** die ausgewertete Anzahl von Signalgebern als Inhalt einer graphischen Benutzeroberfläche (18) angezeigt wird.

3. Verfahren nach Anspruch 1 oder 2, **dadurch gekennzeichnet, dass** das bestimmte Gütekriterium als Inhalt einer graphischen Benutzeroberfläche (18) angezeigt wird.

4. Verfahren nach Anspruch 3, **dadurch gekennzeichnet, dass** das Gütekriterium als prozentualer Wert angezeigt wird.

5. Verfahren nach einem der vorhergehenden Ansprüche, **dadurch gekennzeichnet, dass** das Gütekriterium bestimmt wird, indem die Verteilung der Eigenwerte der Empfangssignale analysiert wird.

6. Verfahren nach Anspruch 5, **dadurch gekennzeichnet, dass** die Verteilung der Eigenwerte der Empfangssignale als Inhalt einer graphischen Benutzeroberfläche (18) angezeigt wird.

7. Verfahren nach einem der vorhergehenden Ansprüche, **dadurch gekennzeichnet, dass** bei der Bestimmung des Gütekriteriums Einstellungen eines Benutzers berücksichtigt werden, insbesondere eine ausgewählte Frequenzbandbreite, eine ausgewählte Anzahl von Abtastwerten und/oder eine ausgewählte Abtastdauer.

8. Verfahren nach einem der vorhergehenden Ansprüche, **dadurch gekennzeichnet, dass** Optimierungsvorgaben für Abtastparameter vorgesehen sind, die die Bestimmung des Gütekriteriums beeinflussen.

9. Verfahren nach einem der vorhergehenden Ansprüche, **dadurch gekennzeichnet, dass** das bestimmte Gütekriterium während des Abtastens der Empfangssignale verwendet wird.

10. Peiler (10) mit einem Antennensystem (13), einer Verarbeitungseinheit (16) und einer Anzeige (14), wobei der Peiler (10) so ausgebildet ist, dass er das Verfahren nach einem der vorhergehenden Ansprüche ausführt.

11. Peiler (10) nach Anspruch 10, **dadurch gekennzeichnet, dass** der Peiler (10) in einer Automatikbetriebsart betrieben werden kann.

12. Peiler (10) nach Anspruch 10 oder 11, **dadurch gekennzeichnet, dass** der Peiler (10) in einer manuellen Betriebsart betrieben werden kann.

13. Anzeigevorrichtung für einen Peiler (10), wobei die Anzeigevorrichtung eine Anzeige (14) und eine Verarbeitungseinheit (16) umfasst, wobei die Verarbeitungseinheit (16) so ausgebildet ist, dass sie das Verfahren nach einem der Ansprüche 1 bis 9 ausführt.

14. Anzeigevorrichtung nach Anspruch 13, **dadurch gekennzeichnet, dass** die Verarbeitungseinheit (52) mit der Anzeige (14) verbunden ist, wobei die Verarbeitungseinheit (52) so ausgebildet ist, dass sie der Anzeige (14) Anzeigedaten liefert, die das bestimmte Gütekriterium so darstellen, dass die Anzeige (14) das Gütekriterium als Inhalt einer grafischen Benutzeroberfläche (18) anzeigt.

## Revendications

1. Procédé de radiogoniométrie comprenant les étapes suivantes :
a) balayage de signaux d'entrée,
b) analyse des signaux d'entrée, des valeurs propres des signaux d'entrée étant déterminées,
c) évaluation, en fonction de l'étape d'analyse, du nombre d'émetteurs de signaux émettant un signal d'entrée dans au moins une bande de fréquences, **caractérisé par** l'étape
d) de détermination d'un critère de qualité pour les signaux d'entrée dans ladite au moins une bande de fréquences, le critère de qualité indiquant la fiabilité du nombre évalué.

2. Procédé selon la revendication 1, **caractérisé en ce que** le nombre évalué d'émetteurs de signaux est affiché en tant que contenu d'une interface utilisateur graphique (18).

3. Procédé selon la revendication 1 ou 2, **caractérisé en ce que** le critère de qualité déterminé est affiché en tant que contenu d'une interface utilisateur graphique (18).

4. Procédé selon la revendication 3, **caractérisé en ce que** le critère de qualité est affiché en tant que valeur de pourcentage.

5. Procédé selon l'une des revendications précédentes, **caractérisé en ce que** le critère de qualité est déterminé en analysant la distribution des valeurs propres des signaux d'entrée.

6. Procédé selon la revendication 5, **caractérisé en ce que** la distribution des valeurs propres des signaux d'entrée est affichée en tant que contenu d'une interface utilisateur graphique (18).

7. Procédé selon l'une des revendications précédentes, **caractérisé en ce que** lors de la détermination du critère de qualité, des réglages d'un utilisateur sont pris en compte, en particulier une largeur de bande de fréquences sélectionnée, un nombre d'échantillons sélectionné et/ou une durée d'échantillonnage sélectionnée.

8. Procédé selon l'une des revendications précédentes, **caractérisé en ce qu'**il est prévu des spécifications d'optimisation pour des paramètres de balayage qui influencent la détermination du critère de qualité.

9. Procédé selon l'une des revendications précédentes, **caractérisé en ce que** le critère de qualité déterminé est utilisé pendant le balayage des signaux d'entrée.

10. Radiogoniomètre (10) comprenant un système d'antennes (13), une unité de traitement (16) et un écran (14), le radiogoniomètre (10) étant réalisé de manière à exécuter le procédé selon l'une des revendications précédentes.

11. Radiogoniomètre (10) selon la revendication 10, **caractérisé en ce que** le radiogoniomètre (10) peut être mis en oeuvre selon un mode automatique.

12. Radiogoniomètre (10) selon la revendication 10 ou 11, **caractérisé en ce que** le radiogoniomètre (10) peut être mis en oeuvre selon un mode manuel.

13. Dispositif d'affichage pour un radiogoniomètre (10), le dispositif d'affichage comprenant un écran (14) et une unité de traitement (16), l'unité de traitement (16) étant réalisée de manière à exécuter le procédé selon l'une des revendications 1 à 9.

14. Dispositif d'affichage selon la revendication 13, **caractérisé en ce que** l'unité de traitement (52) est reliée à l'écran (14), l'unité de traitement (52) étant réalisée de manière à fournir des données d'affichage à l'écran (14), lesquelles représentent le critère de qualité déterminé de telle sorte que l'écran (14) affiche le critère de qualité en tant que contenu d'une interface utilisateur graphique (18).
